# EUROPÄISCHE PATENTANMELDUNG

(11) **EP 1 083 073 A2**
(43) Veröffentlichungstag der Anmeldung: **14.03.2001**
(21) Anmeldenummer: 00116646.1
(22) Anmeldetag: 02.08.2000
(51) Int. Cl.: B60K 15/035

(54) **Endseitige Haltevorrichtung für eine Entlüftungsleitung eines Aktivkohlefilters**

(30) Priorität: 10.09.1999 DE 19943292
(71) Anmelder: Dr.Ing. h.c.F. Porsche Aktiengesellschaft, 70435 Stuttgart (DE)
(72) Erfinder: Griesbaum, Josef, 71735 Eberdingen (DE); Essig, Ulrich, 73240 Wendlingen (DE); Kollias, Antonius, 84478 Waldkraiburg (DE)

(57) **Zusammenfassung**

Eine endseitige Haltevorrichtung (3) für eine Entlüftungsleitung (2) eines Kraftstoffbehälters an einer feststehenden Wand (4) eines Kraftfahrzeuges ist zweiteilig ausgebildet und setzt sich aus einem mit der Entlüftungsleitung verbundenen Stutzen (6) und einem Gegenstück (7) zusammen. Der der Entlüftungsleitung abgekehrte Endbereich (8) des Stutzens und das Gegenstück werden von gegenüberliegenden Seiten (A,B) im Bereich der Ausnehmung (5) an die Wand herangeführt und ineinander geschoben, bis sie über eine lösbare Rastverbindung zusammenwirken.

## Beschreibung

Die Erfindung betrifft eine endseitige Haltevorrichtung für eine Entlüftungsleitung eines Kraftstoffbehälters gemäß dem Oberbegriff des Patentanspruches 1.

Bei einer bekannten Anordnung der eingangs genannten Gattung umfaßt die endseitige Haltevorrichtung eine abgewinkelte Tülle aus Gummi oder Kunststoff, wobei ein Endbereich der Tülle auf ein Ende der durch ein Polyamidrohr gebildeten Enlüftungsleitung aufgeschoben wird. Die mit der Entlüftungsleitung verbundene Tülle wird danach mit dem anderen Endbereich in die Ausnehmung der feststehenden Wand eingesetzt. Die einteilige Tülle stützt sich mit zwei ringförmigen, beabstandeten Lippenabschnitten an gegenüberliegenden Seiten der Wand ab.

Dieser Anordnung haftet der Nachteil an, daß das Einsetzen der Tülle in die Ausnehmung der feststehenden Wand des Kraftfahrzeuges mühsam und zeitaufwendig ist.

Aufgabe der Erfindung ist es, eine Haltevorrichtung für ein freies Ende einer Entlüftungsleitung eines Kraftstoffbehälters so weiterzubilden, daß bei sicherer Befestigung die Montage der Haltevorrichtung vereinfacht wird.

Diese Aufgabe wird erfindungsgemäß durch die Merkmale des Patentanspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die zweiteilige Ausbildung der Haltevorrichtung die Montage an der feststehenden Wand wesentlich vereinfacht wird.

Auf den Stutzen der Haltevorrichtung wird in einfacher Weise das freie Ende der Entlüftungsleitung aufgeschoben. Ein am äußeren Umfang des Stutzens vorgesehenes Tannenbaumprofil sorgt für einen sicheren Sitz der Entlüftungsleitung. Ein radialer Bund am Stutzen begrenzt die aufgeschobene Stellung der Entlüftungsleitung. Der Stutzen und das mit dem Stutzen über eine lösbare Rastverbindung zusammenwirkende Gegenstück werden von gegenüberliegenden Seiten in die Ausnehmung des feststehenden Wandabschnitts eingesetzt und nehmen zwischen sich die Wand auf.

Durch die erfindungsgemäße Haltevorrichtung ist an unzugänglicher Stelle eine einfache Festlegung des freien Endes der Entlüftungsleitung möglich. Die Rastverbindung wird durch federnde Haltestege des Gegenstücks und mit diesem zusammenwirkenden vorstehende Haltenasen des Stutzens gebildet und ist einfach und kostengünstig herstellbar.

Ein Ausführungsbeispiel der Erfindung ist in der Zeichnung dargestellt und wird im folgenden näher erläutert.

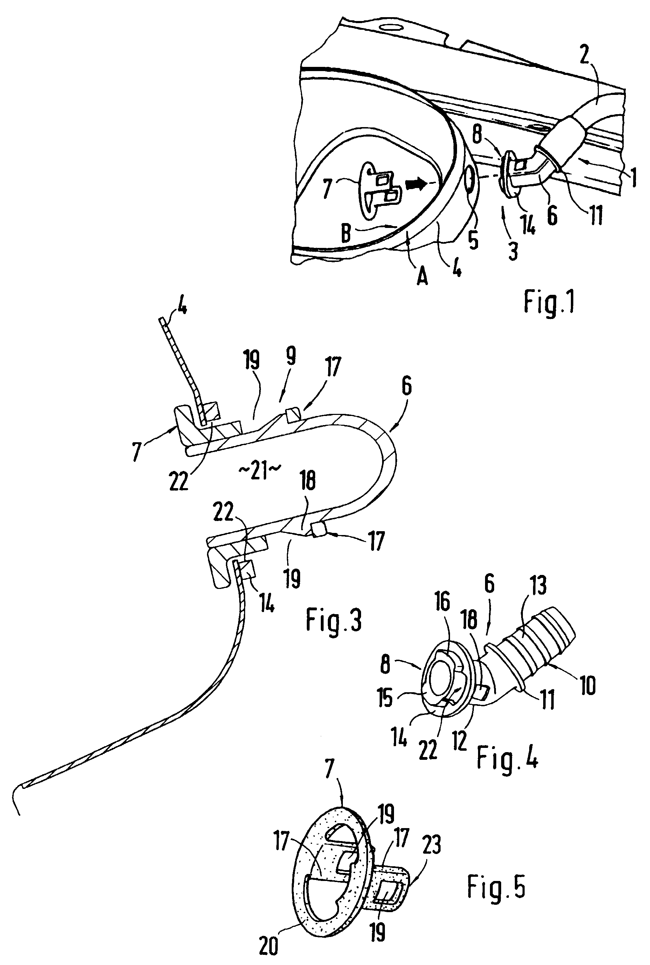

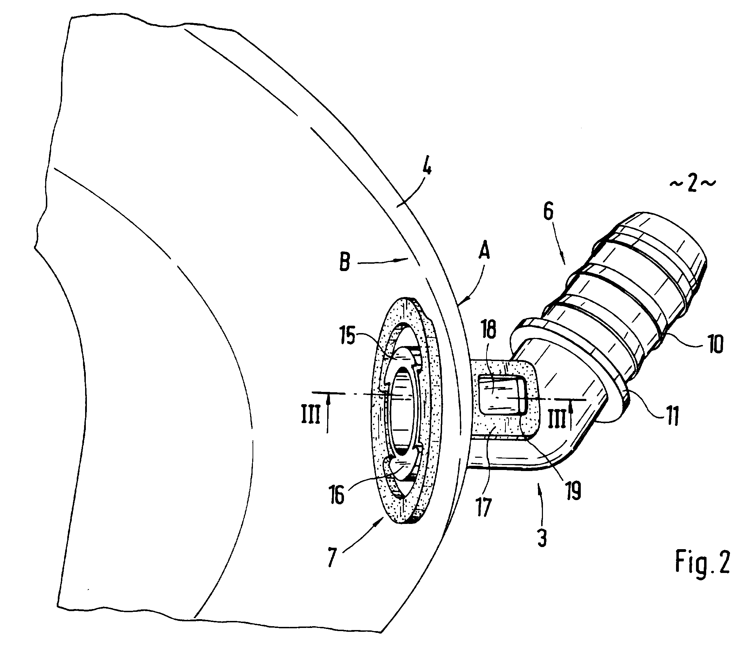

Es zeigen
- Fig. 1: eine perspektivische Ansicht auf das freie Ende einer Entlüftungsleitung, die mittels einer zweiteiligen Haltevorrichtung an einer feststehenden Wand eines Kraftfahrzeuges festlegbar ist, wobei die beiden Teile der Haltevorrichtung noch nicht miteinander verbunden sind,
- Fig. 2: einen Ausschnitt entsprechend Fig. 1 mit montierter Haltevorrichtung in größerer Darstellung, jedoch ohne die Entlüftungsleitung,
- Fig. 3: einen Schnitt nach der Linie III-III der Fig. 2,
- Fig. 4: eine perspektivische Ansicht auf den Stutzen der Haltevorrichtung und
- Fig. 5: eine perspektivische Ansicht auf das Gegenstück der Haltevorrichtung.

Ein Ende 1 einer Entlüftungsleitung 2 eines nicht näher dargestellten Kraftstoffbehälters ist unter Vermittlung einer Haltevorrichtung 3 an einer feststehenden Wand 4 festlegbar. Im Ausführungsbeispiel wird die Entlüftungsleitung 2 durch ein Rohr aus geeignetem Kunststoff (z.B. Polyamid oder dergleichen) gebildet, wobei das nicht gezeigte Ende an einen nicht näher dargestellten Aktivkohlefilter angeschlossen ist. Das andere Ende 1 der Entlüftungsleitung 2 steht mit der Atmosphäre in Verbindung. Zur Festlegung der Haltevorrichtung 3 an der feststehenden Wand 4 ist an dieser eine entsprechende Ausnehmung 5 vorgesehen.

Erfindungsgemäß ist die aus Kunststoff gefertigte Haltevorrichtung 3 zweiteilig ausgebildet und setzt sich aus einem mit der Entlüftungsleitung 2 verbundenen Stutzen 6 und einem Gegenstück 7 zusammen. Der der Entlüftungsleitung 2 abgekehrte Endbereich 8 des Stutzens 6 und das Gegenstück 7 werden von gegenüberliegenden Seiten A, B im Bereich der Ausnehmung 5 an die Wand 4 herangeführt und danach ineinander geschoben, wobei die beiden Teile 6, 7 über eine Rastverbindung 9 lösbar miteinander verbunden sind.

Der Stutzen 6 weist im Bereich der aufgeschobenen Entlüftungsleitung 2 außenseitig ein Tannenbaumprofil 10 auf. Zur Begrenzung der aufgeschobenen Entlüftungsleitung 2 ist am Stutzen 6 benachbart dem hinteren Ende des Tannenbaumprofils 10 ein umlaufender radialer Bund 11 ausgebildet.

Im Ausführungsbeispiel ist der Stutzen 6 als Winkelstutzen ausgebildet, der sich aus zwei abgewinkelten Schenkeln 12, 13 zusammensetzt. Der Stutzen 6 könnte jedoch auch einen geradlinigen Verlauf aufweisen. Der Stutzen 6 weist an dem der Entlüftungsleitung 2 abgekehrten Endbereich 8 einen radialen Stützkragen 14 sowie axial vorstehende Kreisringabschnitte 15, 16 auf, wobei sich der Stützkragen 14 an der einen Seite A der Wand 4 abstützt und die beiden Kreisringabschnitte 15, 16 abschnittsweise in die Ausnehmung 5 der Wand 4 hineinragen.

Die lösbare Rastverbindung 9 wird durch federnde Haltestege 17 des Gegenstücks 7 und mit diesem zusammenwirkende vorstehende Haltenasen 18 des Stutzens 6 gebildet, wobei die mit Aussparungen 19 versehenen Haltestege 17 die Haltenasen 18 hintergreifen.

Im Ausführungsbeispiel sind zumindest zwei beabstandete federnde Haltestege 17 von einem elliptischen Auflagebund 20 des Gegenstücks 7 weggeführt, wobei sich die Haltestege 17 etwa rechtwinkelig zur Ebene des Auflagebundes 20 erstrecken. An beiden Haltestegen 17 sind rechteckförmige Aussparungen 19 für die stutzenseitigen Haltenasen 18 ausgebildet.

Am radialen Stützkragen 14 des Stutzens 6 sind außerhalb des inneren Rohrabschnitts 21 Führungsschlitze 22 zum Hindurchführen der Haltestege 17 des Gegenstücks 7 vorgesehen. Die Führungsschlitze 22 sind geringfügig breiter als die hindurchzuführendenen Haltestege 17. Die Haltestege 17 und die Führungsschlitze 22 weisen - in der Draufsicht gesehen - einen gebogenen Formverlauf auf. Zwischen den beiden gegenüberliegenden Führungsschlitzen 22 erstrecken sich - dem Stützkragen 14 vorgelagert- die beiden Kreisringabschnitte 15, 16 des Stutzens 6.

In Einschubrichtung des Gegenstücks 7 gesehen erstrecken sich nachfolgend an den Stützkragen 14 am Stutzen 6 die beiden radial vorstehenden Haltenasen 18. Die rechteckförmigen Aussparungen 19 an den Haltestegen 17 sind geringfügig breiter als die Breite der Haltenasen 18. Die vorderen Enden 23 der Haltestege 17 werden bei der Montage durch die schiefen Ebenen der Haltenasen 18 nach außen gebogen, bis die Enden 23 die Haltenasen 18 hintergreifen. Danach bewegen sich die Haltestege 17 wieder nach innen in Richtung Stutzen 6.

Die Wand 4 weist im Ausführungsbeispiel - in der Draufsicht gesehen - einen gebogenen Formverlauf auf. Aus diesem Grunde ist der Stützkragen 14 ebenfalls mit einer entsprechenden Bombierung versehen. Die Wand 4 und der Stützkragen 14 könnten jedoch auch einen geradlinigen Formverlauf aufweisen.

## Patentansprüche

1. Endseitige Haltevorrichtung für eine Entlüftungsleitung eines Kraftstoffbehälters an einer feststehenden Wand eines Kraftfahrzeuges, wobei die Haltevorrichtung an ein Ende der Entlüftungsleitung angeschlossen und an der Wand eine Ausnehmung zum Festlegen der Haltevorrichtung vorgesehen ist, dadurch gekennzeichnet, daß die Haltevorrichtung (3) zweiteilig ausgebildet ist und sich aus einem mit der Entlüftungsleitung (2) verbundenen Stutzen (6) und einem Gegenstück (7) zusammensetzt, wobei der der Entlüftungsleitung (2) abgekehrte Endbereich des Stutzens (6) und das Gegenstück (7) von gegenüberliegenden Seiten (A, B) im Bereich der Ausnehmung (5) an die Wand (4) herangeführt und ineinander geschoben werden, bis sie über eine lösbare Rastverbindung (9) miteinander zusammenwirken.

2. Haltevorrichtung nach Anspruch 1, dadurch gekennzeichnet, daß der Stutzen (6) im Bereich der aufgeschobenen Entlüftungsleitung (2) außenseitig ein Tannenbaumprofil (10) aufweist.

3. Haltevorrichtung nach Anspruch 2, dadurch gekennzeichnet, daß zur Begrenzung der aufgeschobenen Entlüftungsleitung (2) am Stutzen (6) benachbart dem Tannenbaumprofil (10) ein radialer Bund (11) ausgebildet ist.

4. Haltevorrichtung nach Anspruch 1, dadurch gekennzeichnet, daß der Stutzen (6) an dem der Entlüftungsleitung (2) abgekehrten Endbereich einen radialen Stützkragen (14) sowie axial vorstehende Kreisringabschnitte (15, 16) aufweist, wobei sich der Stützkragen (14) an der einen Seite der Wand (4) abstützt und die Kreisringabschnitte (15, 16) abschnittsweise in die Ausnehmung (5) der Wand (4) hineinragen.

5. Haltevorrichtung nach einem der vorangegangenen Ansprüche, dadurch gekennzeichnet, daß die lösbare Rastverbindung (9) durch federnde Haltestege (17) des Gegenstücks (7) und mit diesen zusammenwirkende vorstehende Haltenasen (18) des Stutzens (6) gebildet wird, wobei die mit Aussparungen (19) versehenen Haltestege (17) die Haltenasen (18) hintergreifen.

6. Haltevorrichtung nach Anspruch 5, dadurch gekennzeichnet, daß zumindest zwei Haltestege (17) von einem ringförmigen Auflagebund (20) des Gegenstücks (7) weggeführt sind, wobei die Haltestege (17) rechteckförmige Aussparungen (19) aufweisen.

7. Haltevorrichtung nach einem der vorangegangenen Ansprüche, dadurch gekennzeichnet, daß am radialen Stützkragen (14) des Stutzens (6) Führungsschlitze (22) zum Hindurchführen der Haltestege (17) des Gegenstücks (7) vorgesehen sind und daß nachfolgend an den Stützkragen (14) am Stutzen (6) die Haltenasen (18) ausgebildet sind.

8. Haltevorrichtung nach Anspruch 1, dadurch gekennzeichnet, daß der Stutzen (6) als Winkelstutzen ausgebildet ist.
